# EUROPEAN PATENT APPLICATION

(11) **EP 4 253 134 A1**
(43) Date of publication of application: **04.10.2023**
(21) Application number: 23164142.4
(22) Date of filing: 24.03.2023
(51) Int. Cl.: B60L 55/00, B60L 58/15, B60L 58/12, B60L 53/66, B60L 53/65, B60L 58/14, B60L 58/13, B60L 53/10, B60L 53/68

(54) **VEHICLE CHARGING CONTROL SYSTEM AND METHOD FOR CONTROLLING VEHICLE-TO-VEHICLE CHARGING**

(30) Priority: 28.03.2022 GB 202204342
(71) Applicant: Jaguar Land Rover Limited, Coventry, Warwickshire CV3 4LF (GB)
(72) Inventor: Choudhary, Bhramar, Coventry, CV3 4LF (GB); Choudhary, Ravi, Coventry, CV3 4LF (GB); Balharan, Pulkit, Coventry, CV3 4LF (GB)
(74) Representative: Jaguar Land Rover Patents Department

(57) **Abstract**

Aspects of the present invention relate to a charging control system (1) for controlling vehicle-to-vehicle charging between a charge provider vehicle (V2) and a charge receiver vehicle (V1). The charge provider vehicle (V2) has a provider vehicle on-board battery (31) and the charge receiver vehicle (V1) has a receiver vehicle on-board battery (11). The charging control system (1) has at least one controller (3, 15, 35) configured to identify a connection between the charge provider vehicle (V2) and an external power supply (MCS) operable to perform gridto-vehicle charging of the provider vehicle on-board battery (31); and to identify a connection between the charge provider vehicle (V2) and the charge receiver vehicle (V1) for performing vehicle-to-vehicle charging. In dependence on the identification of the connection between the charge provider vehicle (V2) and the external power supply (MCS) and the identification of the connection between the charge provider vehicle (V2) and the charge receiver vehicle (V1), at least one controller (3, 15, 35) is configured to output a signal (SPC1, SPC2, SPC3) to configure the charge provider vehicle (V2) and/or the charge receiver vehicle (V1) in preparation for vehicle-to-vehicle charging. Aspects of the present invention also relate to a method of controlling a vehicle-to-vehicle charging operation, and a non-transitory computer-readable medium.

## Description

### TECHNICAL FIELD

The present disclosure relates to a vehicle charging control system and method. Aspects of the invention relate to a charging control system for controlling a vehicle-to-vehicle charging; a method of controlling a vehicle-to-vehicle charging operation; and a non-transitory computer-readable medium for causing a processor to perform the method.

### BACKGROUND

There is a continuing need to develop and expand the charging infrastructure to provide charging stations for electric vehicles (EVs), such as battery electric vehicles (BEVs). Building charging stations and the related charging infrastructure requires considerable investment and may place unwanted limitations on the use of electric vehicles, for example restricted to the grid infrastructure. The charging infrastructure may be limited in remote areas, for example in rural settings. However, problems may also arise in urban areas due to heavy usage or congestion of charging stations, for example at busy times. A vehicle may require charging on an urgent basis, for example to complete a journey or a planned route.

It is an aim of the present invention to address one or more of the disadvantages associated with the prior art.

### SUMMARY OF THE INVENTION

Aspects and embodiments of the invention provide charging control system for controlling a vehicle-to-vehicle charging; a vehicle; a method of controlling a vehicle-to-vehicle charging operation; and a non-transitory computer-readable medium as claimed in the appended claims

According to an aspect of the present invention there is provided a charging control system for controlling vehicle-to-vehicle charging between a charge provider vehicle and a charge receiver vehicle; the charge provider vehicle having a provider vehicle on-board battery and the charge receiver vehicle having a receiver vehicle on-board battery; wherein the charging control system comprises at least one controller, the charging control system configured to:
identify a connection between the charge provider vehicle and an external power supply operable to perform grid-to-vehicle charging of the provider vehicle on-board battery;
identify a connection between the charge provider vehicle and the charge receiver vehicle for performing vehicle-to-vehicle charging; and
in dependence on the identification of the connection between the charge provider vehicle and the external power supply and the identification of the connection between the charge provider vehicle and the charge receiver vehicle, output a signal to configure the charge provider vehicle and/or the charge receiver vehicle in preparation for vehicle-to-vehicle charging. The external power supply may, for example, be mains (grid) electrical power supply. The charging control system may enable vehicle-to-vehicle charging even when the charge provider vehicle is connected to the external power supply.

The charging control system may configure the charge provider vehicle and/or the charge receiver vehicle for vehicle-to-vehicle charging when the charge provider vehicle is connected to the external power supply operable.

The charging control system may control the grid-to-vehicle charging to enable the vehicle-to-vehicle charging. For example, the charging control system may pause, interrupt or stop the grid-to-vehicle charging. The vehicle-to-vehicle charging may be performed whilst maintaining the connection between the charge provider vehicle and the external power supply.

The charging control system may facilitate control of the vehicle-to-vehicle charging. The charging control system may control the initiation and/or termination of the vehicle-to-vehicle charging. At least in certain embodiments, the charging control system may enable the vehicle-to-vehicle charging to be paused, resumed, stopped, interrupted or cancelled by at least one of the first and second vehicles. At least in certain embodiments, the charging control system may enable remote control of the charging process. A user may not need to be physically present near their vehicle to control the charge transfer.

The external power supply may comprise a mains (grid) electricity supply, for example output from a mains charging unit.

The charge provider vehicle may comprise a connector for connection to the external power supply. The charge provider vehicle may, for example, be a battery electric vehicle (BEV) or a plug-in hybrid electric vehicle (PHEV).

The controller may be configured to receive at least one charge request signal. The controller may control the vehicle-to-vehicle charging in dependence on the at least one charge request signal.

The at least one charge request signal may, for example, be received from the charge receiver vehicle. The at least one charge request signal may be received directly from the charge receiver vehicle or from a device associated with the charge receiver vehicle, such as a cellular telephone or an electronic key.

The controller may be configured to output a charge preparation signal to configure the charge provider vehicle to deliver charge to the charge receiver vehicle and/or to configure the charge receiver vehicle to receive charge from the charge provider vehicle.

The charge receiver vehicle may be configured by controlling an on-board charging module to receive charge from the provider vehicle.

The controller may be configured to determine at least one of the following: a first state of charge (SOC) of the provider vehicle on-board battery; and a second state of charge (SOC) of the receiver vehicle on-board battery. The controller may be configured to control the vehicle-to-vehicle charging in dependence on the determined first state of charge (SOC) and/or the determined second state of charge (SOC). By controlling the vehicle-to-vehicle charging in dependence on the determined first state of charge (SOC), the charging control system may ensure that adequate charge is present on the provider vehicle on-board battery.

The controller may establish communication between the charge provider vehicle and the charge receiver vehicle. The communication may be over a wired connection or may be over a wireless connection.

The controller may be configured to determine a status of the grid-to-vehicle charging of the provider vehicle on-board battery.

The controller may be configured selectively to halt the grid-to-vehicle charging and subsequently to initiate the vehicle-to-vehicle charging. The controller may implement a sequential charging strategy.

The vehicle-to-vehicle charging may be performed only while the determined first state of charge (SOC) is greater than a predetermined threshold. The vehicle-to-vehicle charging may be stopped when the determined first state of charge (SOC) is equal to or less than the predetermined threshold. The controller may be configured to halt the grid-to-vehicle charging when the determined first state of charge (SOC) is greater than or equal to a provider vehicle first threshold. The controller may be configured selectively to halt the vehicle-to-vehicle charging and subsequently to start the grid-to-vehicle charging. The controller may be configured to halt the vehicle-to-vehicle charging when the determined first state of charge (SOC) is less than or equal to a provider vehicle second threshold.

The vehicle-to-vehicle charging may be performed only while the determined second state of charge (SOC) is less than a predetermined threshold. The vehicle-to-vehicle charging may be stopped when the determined second state of charge (SOC) is equal to or greater than the predetermined threshold. The controller may be configured to halt the vehicle-to-vehicle charging when the determined second state of charge (SOC) is greater than or equal to a receiver vehicle first threshold.

The charging control system could be implemented in the charge provider vehicle and/or the charge receiver vehicle. Alternatively, the charging control system could be implemented in a remote server, for example in a cloud-based platform. The at least one controller may be provided in a charging control server which may be remote from the vehicles. The at least one controller may comprise at least one processor and a memory. A set of computational instructions may be provided for controlling operation of the at least one processor. When executed, the instructions may cause the at least one processor to perform the method(s) described herein.

The charging control system may be used in respect of AC charge transfer or DC charge transfer between vehicles.

According to a further aspect of the present invention there is provided a vehicle comprising a charging control system as claimed in any one of the preceding claims.

According to a further aspect of the present invention there is provided a method of controlling a vehicle-to-vehicle charging operation between a charge provider vehicle and a charge receiver vehicle; the charge provider vehicle having a provider vehicle on-board battery and the charge receiver vehicle having a receiver vehicle on-board battery; wherein the method comprises:
identifying a connection between the charge provider vehicle and an external power supply operable to perform grid-to-vehicle charging of the provider vehicle on-board battery;
identifying a connection between the charge provider vehicle and the charge receiver vehicle for performing vehicle-to-vehicle charging; and
in dependence on the identification of the connection between the charge provider vehicle and the external power supply and the identification of the connection between the charge provider vehicle and the charge receiver vehicle, configuring the charge provider vehicle and/or the charge receiver vehicle in preparation for vehicle-to-vehicle charging.

According to a further aspect of the present invention there is provided a non-transitory computer-readable medium having a set of instructions stored therein which, when executed, cause a processor to perform the method(s) described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of the charging control system to control vehicle-to-vehicle charging in accordance with an embodiment of the present invention;
Figure 2 shows a schematic representation of the first and second vehicles connected to each other and to a mains charging unit;

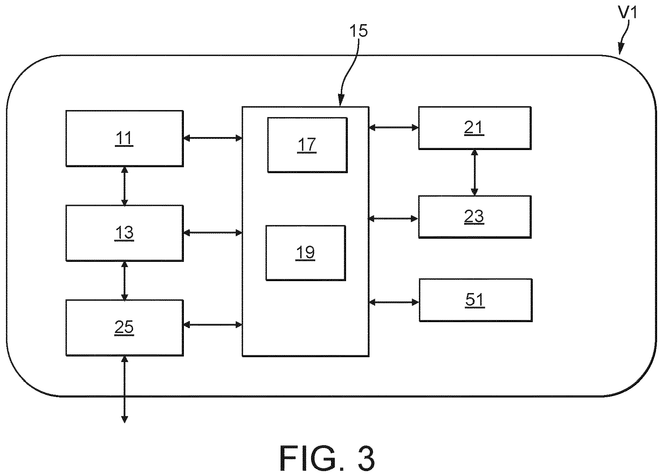

Figure 3 shows a schematic representation of a first vehicle for receiving current in a vehicle-to-vehicle charging operation controlled by the charging control system shown in Figure 1;

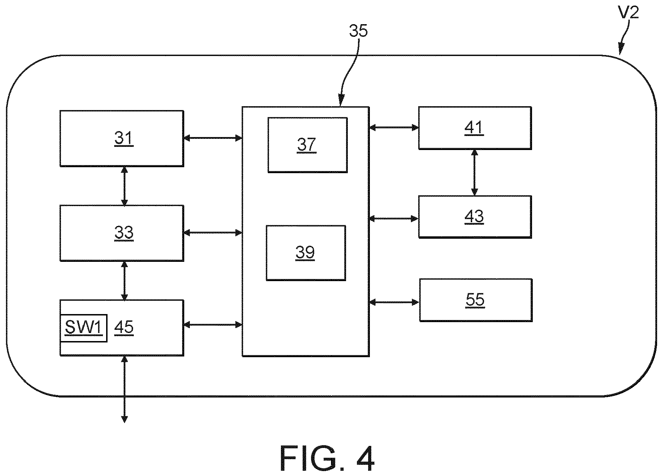

Figure 4 shows a schematic representation of a second vehicle for supplying current in a vehicle-to-vehicle charging operation controlled by the charging control system shown in Figure 1;
Figure 5 shows a schematic representation of a charging control server for controlling the vehicle-to-vehicle charging in the charging control system shown in Figure 1;
Figure 6 shows a block diagram representing operation of the charging control system in accordance with an embodiment of the present invention;
Figure 7A illustrates a vehicle-to-vehicle charging using an alternating current to direct current converter; and
Figure 7B illustrates a vehicle-to-vehicle charging using direct current.

### DETAILED DESCRIPTION

A charging control system 1 in accordance with an embodiment of the present invention is described herein with reference to the accompanying Figures. The charging control system 1 is described herein with reference to a first vehicle V1 and a second vehicle V2.

The charging control system 1 is configured to control vehicle-to-vehicle (V2V) charging between the first and second vehicles V1, V2. The vehicle-to-vehicle (V2V) charging is described herein with the first vehicle V1 configured to receive electric current supplied by the second vehicle V2 during a charging operation. In this scenario, the first vehicle V1 is a charge receiver vehicle; and the second vehicle V2 is a charge provider vehicle. The first and second vehicles V1, V2 are road vehicles, such as automobiles. The first and second vehicles V1, V2 may, for example, comprise a battery electric vehicle (BEV), a plug-in hybrid electric vehicle (PHEV) or a hybrid electric vehicle (HEV). The charging control system 1 is configured to control the vehicle-to-vehicle charging when the first and second vehicles V1, V2 are electrically connected to each other to perform the charging operation. In the present embodiment, the charging control system 1 is configured also to control a grid-to-vehicle (G2V) charging of at least one of the first and second vehicles V1, V2. The charging control system 1 is described herein with reference to the grid-to-vehicle (G2V) charging of the second vehicle V2. It will be understood that the configuration may be altered to perform the grid-to-vehicle (G2V) charging of the first vehicle V1.

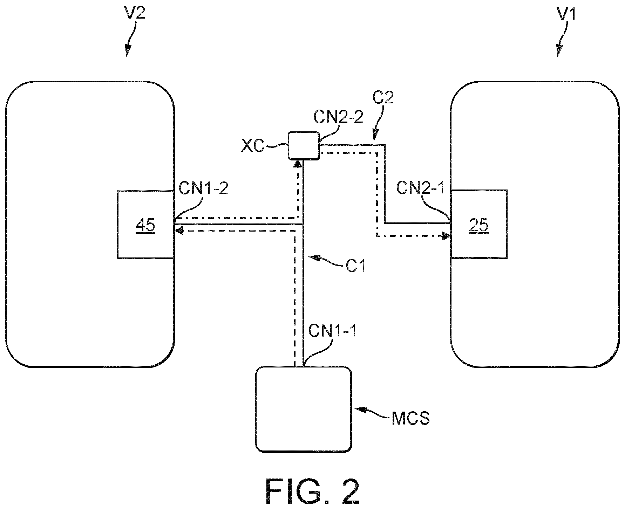

As shown in Figure 2, the second vehicle V2 is connected to a mains charging unit MCS to perform the grid-to-vehicle (G2V) charging. The mains charging unit MCS may be configured to supply alternating current (AC) to the second vehicle V2. The connection between the second vehicle V2 and the mains charging unit MCS is established by a first charging cable C1. The first charging cable C1 comprises first and second connectors CN1-1, CN1-2 for connection to the mains charging unit MCS and the second vehicle V2 respectively. The first vehicle V1 is connected to the second vehicle V2 to perform vehicle-to-vehicle (V2V) charging. In the present embodiment, the second vehicle V2 is connected to the mains charging unit MCS and the first vehicle V1 at the same time (i.e., concurrently). As described herein, the charging control system 1 controls operation of the mains charging unit MCS and/or the second vehicle V2 to enable the vehicle-to-vehicle (V2V) charging of the first vehicle V1.

The connection between the first vehicle V1 and the second vehicle V2 is established by a second charging cable C2. The second charging cable C2 comprises first and second connectors CN2-1, CN2-2 for connection to the first and second vehicles V1, V2 respectively. The second connector CN2-2 of the second charging cable C2 may connect directly to the second vehicle V2. For example, the second connector CN1-2 of the first charging cable C1 may connect to an alternating current (AC) port provided on the second vehicle V2; and the second connector CN2-2 of the first charging cable C2 may connect to a direct current (DC) port provided on the second vehicle V2. In the present embodiment, the first and second charging cables C1, C2 are connected to each other to enable the three-way connection of the mains charging unit MCS, the first vehicle V1 and the second vehicle V2. A secondary connector XC is provided on the first charging cable C1. The secondary connector XC is configured to receive the second connector CN2-2 of the second charging cable C2. The secondary connector XC may, for example, comprise an electrical socket. The first charging cable C1 may be a split (bifurcated) charging cable for connection to the mains charging unit MCS and the first vehicle V1. For example, the first connector CN1-1 and the secondary connector XC may be provided on separate branches of the first charging cable C1. It will be appreciated that the first and second vehicles V1, V2 may be connected to each other while maintaining the connection between the mains charging unit MCS and the second vehicle V2. The control strategy described herein may be employed when the grid-to-vehicle (G2V) charging comprises an inductive charging system for performing wireless charging of the second vehicle V2. The inductive charging system may, for example, comprise a transmitter coil for establishing a magnetic field to transfer energy to a receiver coil provided in the second vehicle V2. The inductive charging system may be used instead of the first charging cable V1.

The charging control system 1 in the present embodiment is implemented by a charging control server 3. The charging control server 3 is a remote server and is configured to communicate with the first and second vehicles V1, V2 over a wireless communication network. In certain embodiments, the charging control server 3 may be configured also to communicate with the mains charging unit MCS to control the grid-to-vehicle (G2V) charging of the second vehicle V2. The communication between the charging control server 3 and the mains charging unit MCS may be over a wired communication network or a wireless communication network.

The charging control server 3 is operative to receive a charging request CR1 generated by the first vehicle V1. The charging request CR1 indicates that a charge is required for an onboard traction battery on the first vehicle V1. The charging control system 1 may be operative to perform a matching function to match the first vehicle V1 to a second vehicle V2. In dependence on the charging request CR1, the charging control server 3 communicates with a plurality of other vehicles Vn to identify one or more candidate second vehicles V2 suitable for supplying electric current to provide a charging function. The charging control server 3 may, for example, communicate with vehicles Vn within a predetermined range of the first vehicle V1. A matching algorithm may be implemented to identify potential vehicle matches to form one or more pairs of the first and second vehicles V1, V2 suitable for performing vehicle-to-vehicle charging. A cost function may be applied to each candidate vehicle pairing to identify the most appropriate match. The matching function may, for example, identify one or more candidate second vehicles V2 identified as being available to perform a charging operation within a predetermined range of the first vehicle V1.

The charging request CR1 may comprise one or more of the following:
i. A unique identifier for identifying the first vehicle V1;
ii. A vehicle type and/or model identifier of the first vehicle V1;
iii. A required connector type for charging the first vehicle V1;
iv. A second state of charge SOC2 of the traction battery in the first vehicle V1;
v. A charging capacity and/or a charging rate for the first vehicle V1;
vi. A charge requirement, for example to indicate an electrical power (kW) to be transferred to the traction battery in the first vehicle V1 during the charging operation; and
vii. A temporal requirement for performing the charge operation, for example defining a time or a period of time for initiating and/or completing the charge operation.

The charging request CR1 may also include additional user information, for example to access a user account associated with the first vehicle V1. The user information may comprise login information for the user account. The user account may be implemented by the charging control server 3. Alternatively, the user account may be implemented on a separate server and the charging control server 3 may control access to the user account. The user account may be accessed to make a financial payment associated with the charging operation. The value of the financial payment may be calculated in respect of one or more of the following: a quantity of the electrical power supplied to the first vehicle V1 during the charging operation; a duration of the charging operation; a time of day; and a dynamic pricing factor, for example based on demand (to provide surge pricing). The pricing may be higher in an emergency case, for example if the first vehicle V1 is fully discharged and stranded. The dynamic pricing factor may depend on factors such as demographic information of the vehicle. The dynamic pricing factor may apply a first pricing rate if the first vehicle V is located in a remote area, and a second pricing rate if the first vehicle V1 is located in an urban area. The first and second pricing rates may be different from each other, for example the first pricing rate may be greater than the second pricing rate.

The first vehicle V1 comprises a first traction battery 11 for supplying electrical power to one or more first traction motors 13. The first vehicle V1 comprises a first controller 15 having at least one first electronic processor 17 and a first system memory 19. The first controller 15 is configured to determine a first state of charge SOC1 of the first traction battery 11. The first vehicle V1 comprises a first navigation system 21 for determining a geospatial location of the first vehicle V1. The first controller 15 is configured to communicate with the navigation system 21 to determine the geospatial location of the first vehicle V1. The first controller 15 may also access a vehicle communication network, such as a CAN bus, to determine vehicle operating parameters.

The first controller 15 comprises a first wireless communication module 23 for wireless communication with the charging control server 3. The first wireless communication module 23 is operative selectively to transmit and receive signals from the charging control server 3. By way of example, the first wireless communication module 23 may transmit a first charge request signal (SCR1) SCR1 comprising a charge request CR1 to request a charging operation. The first charge request signal (SCR1) SCR1 may be transmitted in dependence on a user input. Alternatively, the charge request signal (SCR1) SCR1 may be generated automatically, for example in dependence on a determination that charging of the first traction battery 11 is required to complete a current route. The first controller 15 is configured to generate a first vehicle connected signal SVC1 when the first and second vehicles V1, V2 are connected to each other. In the present embodiment, the first vehicle connected signal SVC1 is generated when the first and second vehicles V1, V2 are connected to each other by the second charging cable C2. The first wireless communication module 23 transmits the first vehicle connected signal SVC1 to the charging control server 3. The first vehicle connected signal SVC1 may comprise a first vehicle identifier for uniquely identifying the first vehicle V1. The charging control server 3 uses the first vehicle identifier to identify the first vehicle V1.

The first vehicle V1 comprises a first charging module 25 for supplying electric current to the first traction battery 11 to store energy (i.e., to charge the first traction battery 11). The first charging module 25 may comprise an AC-DC converter for converting alternating current (AC) to direct current (DC) to charge the first traction battery 11. Alternatively, the first charging module 25 may comprise a direct current (DC) charging module for receiving direct current (DC). The first charging module 25 is disposed onboard the first vehicle V1 and can be connected to an external power source to receive electric current to charge the first traction battery 11. The external power source may, for example, comprise a mains electrical supply or an external (offboard) battery. As described herein, the first charging module 25 is selectively configurable to receive electric current from the second vehicle V2 to charge the first traction battery 11. Alternatively, or in addition, the first charging module 25 may receive electric current from an onboard generator, for example an internal combustion engine (not shown) disposed in the first vehicle V1.

The second vehicle V2 comprises a second traction battery 31 for supplying electrical power to one or more second traction motors 33. The second vehicle V2 comprises a second controller 35 having at least one second electronic processor 37 and a second system memory 39. The second controller 35 is configured to determine a second state of charge SOC2 of the second traction battery 31. The second vehicle V2 comprises a second navigation system 41 for determining a geospatial location of the second vehicle V2. The second controller 35 is configured to communicate with the second navigation system 41 to determine the geospatial location of the second vehicle V2. The second controller 35 may also access a vehicle communication network, such as a CAN bus, to determine vehicle operating parameters.

The second controller 35 comprises a second wireless communication module 43 for wireless communication with the charging control server 3. The second wireless communication module 43 may perform similar functions to the first wireless communication module 23, for example to transmit a second charge request signal (SCR1) SCR2. However, for the sake of brevity, the description herein will detail the operation of the second wireless communication 43 following generation of the first charge request signal (SCR1) SCR1 generated by the first vehicle V1. The second controller 35 is configured to generate a grid connected signal SGV when the second vehicle V2 is connected to the mains charging unit MCS. In the present embodiment, the grid connected signal SGV is generated when the second vehicle V2 is connected to the mains charging unit MCS by the first charging cable C1. The grid connected signal SGV may comprise a status indicator, for example to indicate whether charging of the second vehicle V2 is active. The second controller 35 is configured to generate a second vehicle connected signal SVC2 when the first and second vehicles V1, V2 are connected to each other. In the present embodiment, the second vehicle connected signal SVC2 is generated when the first and second vehicles V1, V2 are connected to each other by the second charging cable C2. As described herein, the second charging cable C2 is connected to the secondary connector XC provided on the first charging cable C1.

The second wireless communication module 23 transmits the grid connected signal SGV and the second vehicle connected signal SVC2 to the charging control server 3. The second vehicle connected signal SVC2 may comprise a second vehicle identifier for uniquely identifying the second vehicle V2. The charging control server 3 uses the second vehicle identifier to identify the second vehicle V2. The second wireless communication module 43 may transmit a charge authorisation signal to the charging control server 3 to authorise a charging operation. The charge authorisation signal may, for example, be transmitted in dependence on a user input. Alternatively, the charge authorisation signal may be generated automatically, for example in dependence on a charge available flag being set to indicate that a charging operation is always available.

The second vehicle V2 comprises a second charging module 45 for supplying electric current to the second traction battery 31 to store energy (i.e., to charge the second traction battery 31). The second charging module 45 may comprise an AC-DC converter for converting alternating current (AC) to direct current (DC) to charge the second traction battery 31. Alternatively, the second charging module 45 may comprise a direct current (DC) charging module for receiving direct current (DC). The second charging module 45 is disposed onboard the second vehicle V2 and can be connected to an external power source to receive electric current to charge the second traction battery 31. The external power source may, for example, comprise a mains electrical supply or an external (offboard) battery. As described herein, the second charging module 45 can be connected to the first vehicle V1 to supply electric current to charge the first traction battery 11. Thus, the first and second vehicles V1, V2 may be connected to each other to perform vehicle-to-vehicle charging. The connection between the first and second vehicles V1, V2 is a wired connection, for example comprising the second charging cable C2 having first and second connectors CN2-1, CN2-2 for connection to the first and second charging modules 25, 45, respectively. As described herein, the first and second vehicle connected signals SVC1, SVC2 are generated when the first and second vehicles V1, V2 are connected by the second charging cable C2. The second charging module 45 comprises a switching unit SW1 for selectively changing the charging functions. The switching unit SW1 is operative to configure the second charging module 45 selectively to receive electric current from the mains charging unit MCS (via the first charging cable C1) for grid-to-vehicle (G2V) charging of the second traction battery 31; and selectively to output electric current (via the second charging cable C2) for vehicle-to-vehicle (V2V) charging of the first traction battery 11. The switching unit SW1 is operable to switch between different charging modes, for example to change from grid-to-vehicle (G2V) charging to vehicle-to-vehicle (V2V) charging; and/or to change from vehicle-to-vehicle (V2V) charging to grid-to-vehicle (G2V) charging. In the present embodiment, the switching unit SW1 can be controlled remotely by the charging control server 3. In particular, the charging control server 3 outputs a charging preparation signal SCP to prepare the second charging module 45 for grid-to-vehicle (G2V) charging or vehicle-to-vehicle (V2V) charging. The charging preparation signal SCP may also be output to the first vehicle V1, for example to prepare the first charging module 25 for vehicle-to-vehicle (V2V) charging.

The first and second controllers 15, 35 may provide administrative access rights. The administrative access rights may enable the charging process to be controlled independently from each of the first and second vehicles V1, V2 (or communication devices associated with the first and second vehicles V1, V2). The administrative access rights may enable the charge process to be interrupted or abandoned from each side, for example due to unsafe or abnormal behaviour associated with one of the first and second charging modules 25, 45.

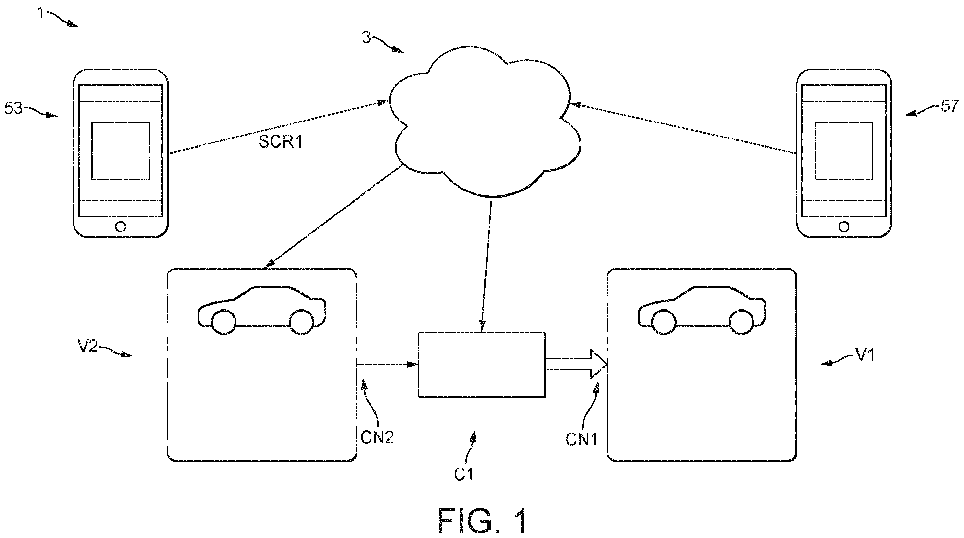

A first human machine interface (HMI) 51 is disposed on the first vehicle V1. The first HMI 51 may, for example, comprise a touch screen provided in the first vehicle V1 for detecting user inputs. The first HMI 51 is operative to control the first charging module 25 and to communicate with the charging control server 3. A first user (associated with the first vehicle V1) may, for example, operate the first HMI 51 to request a charging operation and/or to authorise a charging operation. The first HMI 51 also enables access to a first said user account associated with the first vehicle V1. The first user account may be accessed securely by communication with the charging control server 3. The first user account may be used to make payments for charging the first traction battery 11; and/or to receive payments for using the first traction battery 11 for supplying electric current to another vehicle. Alternatively, or in addition, a communication device, such as a cellular (mobile) telephone, may be used to communicate with the charging control server 3. In the present embodiment, a first communication device 53 (shown in Figure 1) is associated with the first vehicle V1. The first communication device 53 may, for example, provide access to the first user account. A software application operating on the first communication device 53 is configured to communicate with the charging control server 3. The first communication device 53 may be used instead of, or in addition to, the first wireless communication module 23 provided on the first vehicle V1 for communication with the charging control server 3.

A second human machine interface (HMI) 55 is disposed on the second vehicle V2. The second HMI 55 may, for example, comprise a touch screen provided in the second vehicle V2 for detecting user inputs. The second HMI 55 is operative to control the second charging module 45 and to communicate with the charging control server 3. A second user (associated with the second vehicle V2) may, for example, operate the second HMI 55 to request and/or authorise a charging operation. The second HMI 55 also enables access to a second user account linked to the second vehicle V2. The second user account may be accessed securely by communication with the charging control server 3. The second user account may be used to make payments for charging the second traction battery 31; and/or to receive payments for using the second traction battery 31 for supplying electric current to another vehicle. Alternatively, or in addition, a communication device, such as a cellular (mobile) telephone, may be used to communicate with the charging control server 3. A second communication device 57 (shown in Figure 1) is associated with the second vehicle V2. The second communication device 57 may, for example, provide access to the second user account. A software application operating on the second communication device 57 is configured to communicate with the charging control server 3. The second communication device 57 may be used instead of, or in addition to, the second wireless communication module 43 provided on the second vehicle V2 for communication with the charging control server 3.

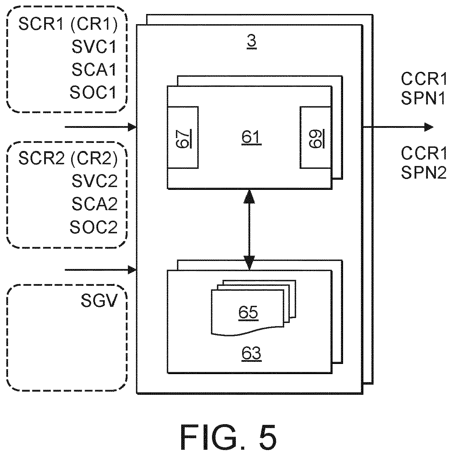

As shown in Figure 5, the charging control server 3 comprises an electronic processor 61 and a memory device 63. The server processor 61 is configured to execute a set of computational instructions 65 stored on the memory device 63. The computational instructions 65 cause the server processor 5 to perform the method(s) described herein. The server processor 61 has at least one electrical input 67 and at least one electrical output 69. The at least one electrical input 67 is configured to receive the charge request signal (SCR1) SCR1 from the first vehicle V1. A matching algorithm may optionally be implemented in dependence on receipt of the charge request signal (SCR1) SCR1 to match the first and second vehicles V1, V2.

The at least one electrical input 67 is configured to receive the first vehicle connected signal SVC1 and/or the second vehicle connected signal SVC2 generated when the first and second vehicles V1, V2 are connected to each other by the second charging cable C2. The charge controller 3 may identify the first and second vehicles V1, V2 once they are connected to each other. For example, the first and second vehicles V1, V2 may be identified in dependence on the first vehicle connected signal SVC1 and/or the second vehicle connected signal SVC2. The charge controller 3 is configured to output a charge confirmation request CCR in dependence on receipt of the first vehicle connected signal SVC1 and/or the second vehicle connected signal SVC2. The charge confirmation request CCR is output to at least one of the first and second vehicles V1, V2 and/or at least one of the first and second communication devices 53, 57. A first charge confirmation request CCR1 is output to the first vehicle V1 and/or the first communication device 53 associated with the first vehicle V1. A second charge confirmation request CCR2 is output to the second vehicle V2 and/or the second communication device 57 associated with the second vehicle V2. The first and second charge confirmation requests CCR1, CCR2 are transmitted along with contact information to enable the first and second users to communicate with each other. The contact information may comprise a contact telephone number, for example.

The second charge confirmation request CCR2 in the present embodiment comprises an authentication password. The authentication password may, for example, be a one-time password (OTP) comprising a unique, randomly generated password. The OTP may, for example, be generated by the charging control server 3 and output to one of the first and second vehicles V1, V2. The OTP is input by a user and then verified by the charging control server 3. Once verified, the OTP is output to the other one of the first and second vehicles V1, V2. The first charge confirmation request CCR1 comprises a prompt requesting the authentication password. The authentication password issued with the second charge confirmation request CCR2 is relayed from the second user to the first user either in-person or remotely, for example via the first and second communication devices 53, 57. The first user responds to the first charge confirmation request CCR1 by sending a first charge approval signal SCA1 to the charging control server 3 to confirm that the charging operation is to proceed.

As prompted in the first charge confirmation request CCR1, the first charge approval signal SCA1 comprises the authentication password issued to the second user. The charging control server 3 performs a check to determine if the received authentication password matches the issued authentication password. If a match is determined, the first charge approval signal SCA1 is authenticated. If a match is not determined, the first charge approval signal SCA1 is not authenticated. The receipt of an authenticated first charge approval signal SCA1 represents a positive (affirmative) response to the first charge confirmation request CCR1 and confirms that the first user wishes to proceed with the charging operation. In dependence on receipt of the first charge approval signal SCA1, the charging controller 3 outputs at least one charge preparation signal SPC to initiate the charging operation. Alternatively, or in addition, the charging control server 3 may require receipt of a second charge approval signal SCA2 from the second user. The second charge approval signal SCA2 may represent a positive (affirmative) response to the second charge confirmation request CCR2 confirming that the second user wishes to proceed with the charging operation. The charging control server 3 may require receipt of the first and second charge approval signals SCA1, SCA2 before outputting at least one charge preparation signal SPC.

The at least one charge preparation signal SPC may be output to the first vehicle V1 and/or the second vehicle V2. A first charge preparation signal SPC1 may be output to the first vehicle V1 to configure the first vehicle V1 to receive charge from the second vehicle V2, for example to configure the first charging module 25 to receive current from the second vehicle V2. The first charge preparation signal SPC1 may be output to the first vehicle V1 to configure the first charging module 25 to enable charging (AC or DC charging, as appropriate) charging. A second charge preparation signal SPC2 may be output to the second vehicle V2 to configure the second vehicle V2 to supply charge to the first vehicle V1, for example to configure the second charging module 45 to supply current to the first vehicle V1. The second charge preparation signal SPC2 may be output to the second vehicle V2 to configure the second charging module 45 to enable bidirectional (vehicle-to-vehicle) charging. The second charge preparation signal SPC2 comprises a control signal to control operation of the switching unit SW1 to configure the second charging module 45 to output electric current for vehicle-to-vehicle (V2V) charging. The charge preparation signal SPC may also comprise a request to configure the first charging module 25 for vehicle-to-vehicle (V2V) charging, for example to receive electric current to charge the first traction battery 11. A third charge preparation signal SPC3 may optionally be output to the mains charging unit MCS. The third charge preparation signal SPC3 may comprise a control signal to halt (or interrupt) the grid-to-vehicle (G2V) charging. The mains charging unit MCS may halt the supply of current to the first vehicle V1 independence on receipt of the third charge preparation signal SPC3.

The charging control server 3 is configured to output a charge termination signal STM1 to terminate the vehicle-to-vehicle (V2V) charging operation. The charge termination signal STM1 may be issued when one or more charging requirement is satisfied, for example after a predetermined time period has elapsed or a predetermined quantity of electrical power (kW) has been output from the second vehicle V2 to the first vehicle V1.

The charging control server 3 may be configured to receive at least one of the first and second states of charge SOC1, SOC2 of the first and second traction batteries 11, 31 respectively. The charging control server 3 may be configured to control the charging operation in dependence on the at least one of the first and second states of charge SOC1, SOC2. The charging control server 3 may perform grid-to-vehicle (G2V) charging of the second vehicle V2 until the first state of charge SOC1 is greater than or equal to a predetermined value; and may then interrupt the grid-to-vehicle (G2V) charging of the first vehicle V1 and initiate the vehicle--to-vehicle (V2V) charging of the first vehicle V1. Alternatively, or in addition, the charging control server 3 may limit or inhibit the vehicle-to-vehicle (V2V) charging if the second state of charge SOC2 is below a predetermined threshold. Alternatively, or in addition, the charge termination signal STM1 may be issued when the first state of charge SOC1 is at a predetermined level.

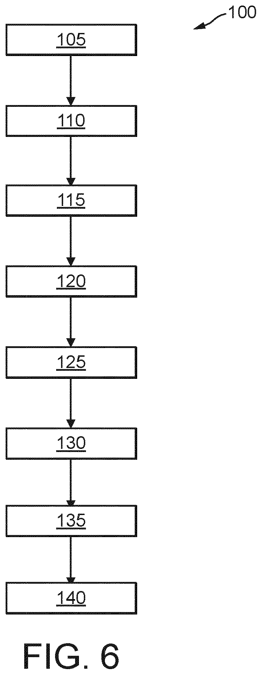

A flow chart 100 representing the operation of the charging control system 1 is shown in Figure 6. A system activation indication is received (BLOCK 105). The first and second vehicles V1, V2 are matched (BLOCK 110). The first and second vehicles V1, V2 are connected to each other by the second charging cable C2. A vehicle connected signal SVC is generated to indicate that the first and second vehicles V1, V2 are connected to each other. The second vehicle V2 (the charge provider vehicle) requests a charge transfer (BLOCK 115). A charge confirmation request is sent to the second vehicle V2 and/or a second communication device 57 associated with the second vehicle V2 (BLOCK 120). The charge confirmation request optionally comprises an authentication password. The charging control system waits for a first charge approval signal SCA1 from the first vehicle V1 (charge receiver vehicle) (BLOCK 125). The charging control server 3 may reference the authentication password to authenticate the first charge approval signal SCA1. The charging control server 3 enables charging of the first vehicle V1 and the second vehicle V2 in dependence on receipt of the first charge approval signal SCA1 (BLOCK 130). At least one charge preparation signal SPC1, SPC2 may be output to the first and second vehicles V1, V2 respectively. The at least one charge preparation signal SPC1 causes the switching unit SW1 to switch from the grid-to-vehicle (G2V) charging to vehicle-to-vehicle (V2V) charging. The second charging preparation signal SCP2 is output to the first vehicle V1 to configure the first charging module 25 for vehicle-to-vehicle (V2V) charging. The charging control system 1 may optionally implement a payment process (BLOCK 135), for example to receive a payment and generate a receipt. The process is terminated (BLOCK 140).

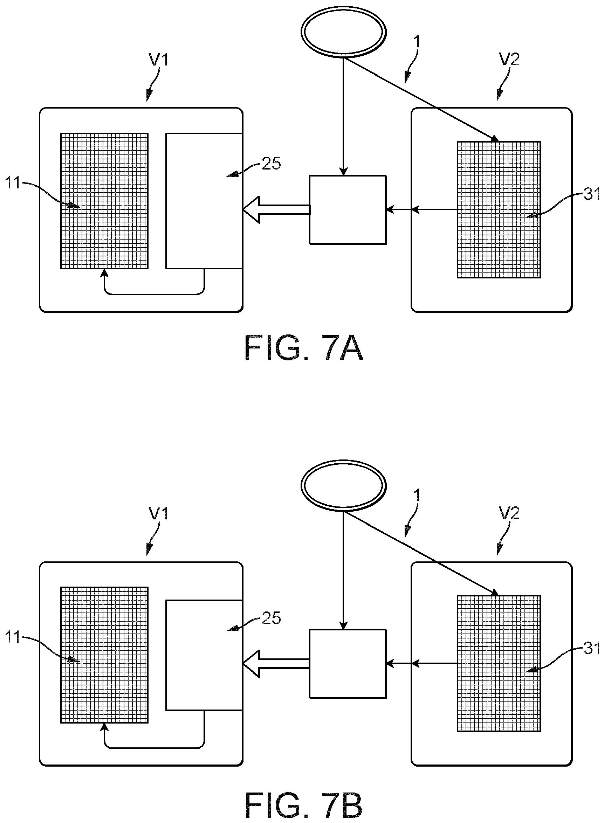

The first and second vehicles V1, V2 are connected to each other by the second charging cable C2 to perform charging. A schematic representation of the first and second vehicles V1, V2 connected to perform AC-DC vehicle-to-vehicle charging is shown in Figure 7A. An off-board converter (i.e. separate from the first and second vehicles V1, V2) may be provided to convert the AC to DC for charging the first traction battery 11. The off-board converter may be omitted if the first charging unit 25 comprises an AC-DC converter. A schematic representation of the first and second vehicles V1, V2 connected to perform DC vehicle-to-vehicle charging is shown in Figure 7B.

As outlined above, the server processor 61 may implement a matching algorithm to match the first and second vehicles V1, V2. This may facilitate locating the first and second vehicles V1, V2 to enable electrical connection by the second charging cable C2. It will be understood that the matching algorithm may be implemented by a separate function, or the first and second vehicles V1, V2 may be matched using other techniques. As such, the implementation of the matching algorithm is not a requirement of the charging control system 1.

It will be understood that communication may be performed directly between the first vehicle V1 and the second vehicle V2. This communication may be used instead of, or in addition to, the communication between the charging control server 3 and the first and second vehicles V1, V2. For example, the charge preparation signal SPC1 and/or the charge termination signal STM 1 may be output from the charging control server 3 to one of the first and second vehicles V1, V2 and relayed to the other one of the first and second vehicles V1, V2. Inter-vehicle communication between the first and second vehicles V1, V2 may be performed wirelessly, for example using a suitable wireless communication protocol; or may be performed over a wired connection, for example associated with the second charging cable C2.

The first and second charge confirmation requests CCR1, CCR2 may be transmitted with additional information, for example financial information indicating financial costs (charges) associated with performing the charging operation. Alternatively, or in addition, the financial information may be transmitted to the first vehicle 51 and/or the first communication device 53. The first charge approval signal SCA1 and/or the second charge approval signal SCA2 may comprise an acceptance of the associated terms and conditions, such as financial costs and charges associated with performing the charging operation.

The charge confirmation request CCR has been described herein with reference to an authentication password, such as a one-time password (OTP). Other techniques may be used to authenticate communications. The charge confirmation request CCR may comprise a comprise a graphical code. For example, the graphical code may be a barcode or a two-dimensional (matrix) barcode, such as a QR (Quick Response) code. The charge confirmation request CCR may be transmitted to one of the first and second communication devices 53, 57 for scanning by the other one of the first and second communication devices 53, 57. The successful scanning of the graphical code may trigger transmittal of the first charge approval signal SCA1 confirming that the first user wishes to proceed with the charging operation. The first charge approval signal SCA1 may be transmitted automatically when the graphical code is scanned; or a user prompt may be generated seeking user confirmation before generating the first charge approval signal SCA1.

The charging control system 1 has been described herein with particular reference to a charging control server 3. It will be understood that at least some of the functions described herein may be implemented by on the first controller 15 disposed in the first vehicle V1 and/or the second controller 35 disposed in the second vehicle V2.

It will be appreciated that various changes and modifications can be made to the present invention without departing from the scope of the present application.

## Claims

1. A charging control system for controlling vehicle-to-vehicle charging between a charge provider vehicle and a charge receiver vehicle; the charge provider vehicle having a provider vehicle on-board battery and the charge receiver vehicle having a receiver vehicle on-board battery; wherein the charging control system comprises at least one controller, the charging control system configured to:
identify a connection between the charge provider vehicle and an external power supply operable to perform grid-to-vehicle charging of the provider vehicle on-board battery;
identify a connection between the charge provider vehicle and the charge receiver vehicle for performing vehicle-to-vehicle charging; and
in dependence on the identification of the connection between the charge provider vehicle and the external power supply and the identification of the connection between the charge provider vehicle and the charge receiver vehicle, output a signal to configure the charge provider vehicle and/or the charge receiver vehicle in preparation for vehicle-to-vehicle charging.

2. A charging control system as claimed in claim 1, wherein the controller is configured to receive at least one charge request signal; and to control the vehicle-to-vehicle charging in dependence on the at least one charge request signal.

3. A charging control system as claimed in claim 1 or claim 2, wherein the controller is configured to output a charge preparation signal to configure the charge provider vehicle to deliver charge to the charge receiver vehicle and/or to configure the charge receiver vehicle to receive charge from the charge provider vehicle.

4. A charging control system as claimed in any one of the preceding claims, wherein the controller is configured to determine at least one of the following:
a first state of charge of the provider vehicle on-board battery; and
a second state of charge of the receiver vehicle on-board battery;

5. A charging control system as claimed in claim 4, wherein the controller is configured to control the vehicle-to-vehicle charging in dependence on the determined first state of charge and/or the second state of charge.

6. A charging control system as claimed in any one of the preceding claims, wherein the controller is configured to determine a status of the grid-to-vehicle charging of the provider vehicle on-board battery.

7. A charging control system as claimed in any one of the preceding claims, wherein the controller is configured selectively to halt the grid-to-vehicle charging and subsequently to initiate the vehicle-to-vehicle charging.

8. A charging control system as claimed in claim 7 when dependent directly or indirectly on claim 4, wherein the controller is configured to halt the grid-to-vehicle charging when the determined first state of charge is greater than or equal to a provider vehicle first threshold.

9. A charging control system as claimed in claim 7 or claim 8, wherein the controller is configured selectively to halt the vehicle-to-vehicle charging and subsequently to start the grid-to-vehicle charging.

10. A charging control system as claimed in claim 9 when dependent directly or indirectly on claim 4, wherein the controller is configured to halt the vehicle-to-vehicle charging when the determined first state of charge is less than or equal to a provider vehicle second threshold.

11. A charging control system as claimed in claim 9 or claim 10 when dependent directly or indirectly on claim 4, wherein the controller is configured to halt the vehicle-to-vehicle charging when the determined second state of charge is greater than or equal to a receiver vehicle first threshold.

12. A vehicle comprising a charging control system as claimed in any one of the preceding claims.

13. A method of controlling a vehicle-to-vehicle charging operation between a charge provider vehicle and a charge receiver vehicle; the charge provider vehicle having a provider vehicle on-board battery and the charge receiver vehicle having a receiver vehicle on-board battery; wherein the method comprises:
identifying a connection between the charge provider vehicle and an external power supply operable to perform grid-to-vehicle charging of the provider vehicle on-board battery;
identifying a connection between the charge provider vehicle and the charge receiver vehicle for performing vehicle-to-vehicle charging; and
in dependence on the identification of the connection between the charge provider vehicle and the external power supply and the identification of the connection between the charge provider vehicle and the charge receiver vehicle, configuring the charge provider vehicle and/or the charge receiver vehicle in preparation for vehicle-to-vehicle charging.

14. A non-transitory computer-readable medium having a set of instructions stored therein which, when executed, cause a processor to perform the method claimed in claim 13.
